# EUROPÄISCHE PATENTSCHRIFT

(11) **EP 0 765 596 B1**
(45) Veröffentlichungstag und Bekanntmachung des Hinweises auf die Patenterteilung: **08.03.2000**
(21) Anmeldenummer: 96110989.9
(22) Anmeldetag: 08.07.1996
(51) Int. Cl.: A01D 78/12

(54) **Landwirtschaftliche Maschine**
Agricultural machine
Machine agricole

(30) Priorität: 26.09.1995 DE 29515382 U
(43) Veröffentlichungstag der Anmeldung: 02.04.1997
(73) Patentinhaber: GREENLAND GMBH & CO. KG, D-78240 Gottmadingen (DE)
(72) Erfinder: Willburger, Richard, 78262 Gailingen (DE); Neels, Wolfgang, 26789 Leer (DE); Gohl, Stefan, 78244 Gottmadingen (DE); Maier, Martin, 78244 Gottmadingen (DE)
(74) Vertreter: Grünecker, Kinkeldey, Stockmair & Schwanhäusser Anwaltssozietät

(56) Entgegenhaltungen:
- EP-A- 0 590 311
- CH-A- 490 786
- FR-A- 2 098 567

## Beschreibung

Die Erfindung betrifft eine landwirtschaftliche Maschine der im Oberbegriff des Patentanspruchs 1 angegebenen Art.

Bei einer landwirtschaftlichen Maschine (Kreiselheuer oder Kreiselschwader) gemäß CH 490 786 hat das den Winkeltrieb aufnehmende Getriebegehäuse auch die Belastung des Fahrwerks auf den Maschinenrahmen zu übertragen. Das mit dem Werkzeugträger einstückige Tellerrad ist mit einem Schrägkugellager radial und nach oben im Gehäusekranz abgestützt, und, da das Schrägkugellager keine Belastungen nach unten aufzunehmen vermag, der Werkzeugträger im Abstand unterhalb des Tellerrades noch zusätzlich mit einem Radialkugellager am inneren Stützteil des Getriebegehäuses. Diese zwei kooperierenden Drehlagerungen erfordern hohen baulichen Aufwand und müssen einwandfrei zueinander zentriert sein, um trotz der im Betrieb über die Drehlagerungen übertragenen Belastungen vom Fahrwerk einwandfreie Getriebeeingriffsbedingungen zu gewährleisten. Die Drehlagerungen für das Tellerrad und den damit verbundenen Werkzeugträger befinden sich im Belastungs-Übertragungsweg, so daß Spannungen durch Biegung oder Verdrehung des Getriebegehäuses die Einstellgeometrie des Winkeltriebs bzw. die Eingriffsverhältnisse beeinflussen. Daraus resultieren erhöhte Lagerbelastungen und nicht exakt vorhersehbare Belastungen zwischen den Verzahnungen. Dies führt zu erhöhtem und frühzeitigem Verschleiß und erfordert es, den Winkeltrieb und die Drehlagerungen stabil und platzbeanspruchend und schwer auszubilden.

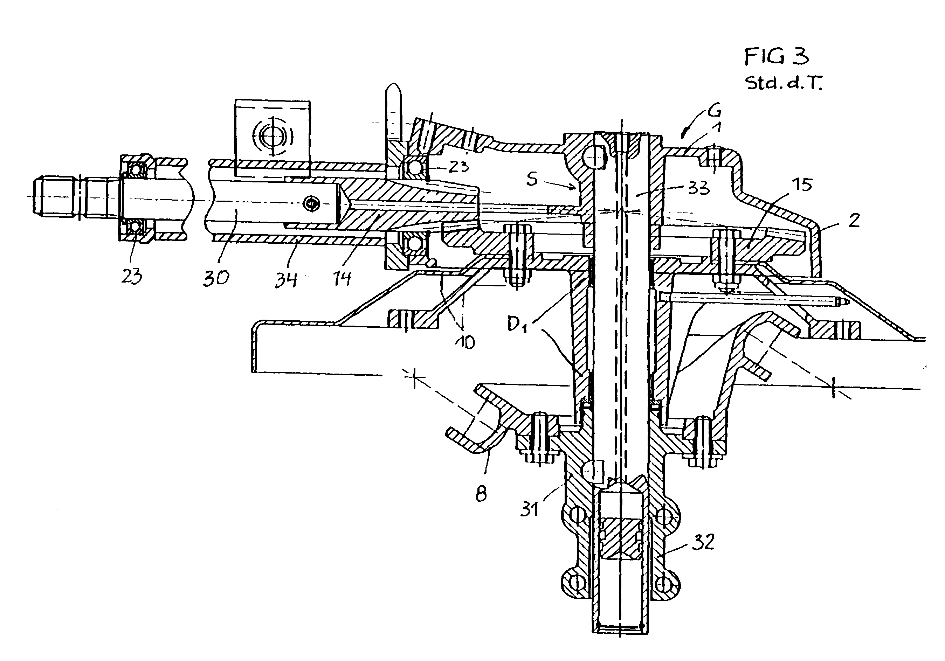

Bei einer durch Vorbenutzung in der Praxis bekannten Maschine dieser Art (Fig. 3) ist ein Tragrohr an das Getriebegehäuse angesetzt, und stützt ein in die Deckwand des Getriebegehäuses eingeformtes Stützrohr eine die Drehachse des Werkzeugträgers definierende Achse, die sich durch den Werkzeugträger nach unten erstreckt. Auf dieser Achse sind nicht nur zwei beabstandete Drehlagerungen für das Tellerrad und den Werkzeugträger angeordnet, sondern auch eine Befestigungseinrichtung für das Fahrwerk und eine Steuervorrichtung für die Werkzeuge des Werkzeugträgers. Die vom Fahrwerk auf den Maschinenrahmen übertragenen Belastungen können zu Torsionen und Biegungen der Achse führen und auch das Tragrohr deformieren, so daß die Eingriffsverhältnisse des Winkeltriebs beeinträchtigt werden. Es befinden sich zumindest die beiden Drehlagerungen des Tellerrades und des Werkzeugträgers im Belastungsübertragungsweg vom Fahrwerk zum Maschinenrahmen.

Bei einem aus EP-A-0 590 311 bekannten Kreiselschwader sind für das Tellerrad und den damit verbundenen Werkzeugträger zwei axial beabstandete Drehlagerungen in Form von Radialkugellagern vorgesehen, die sich beide auf einer in den Stützteil des Getriebegehäuses eingesetzten Säule abstützen, und nicht direkt im Getriebegehäuse.

Bei einer aus FR-A-2 098 567, Fig. 4, bekannten Heubearbeitungsmaschine ist der mit seiner Antriebsscheibe verschraubte Werkzeugträger mit zwei axial beabstandeten Radialkugellagern an einem stationären Gehäusekörper abgestützt.

Der Erfindung liegt die Aufgabe zugrunde, eine Maschine der eingangs genannten Art zu schaffen, bei der die Einstellgeometrie des Winkeltriebs von vom Fahrwerk auf den Maschinenrahmen übertragenen Belastungen so wenig wie möglich beeinträchtigt wird, die im Getriebegehäuse einen verschleißarmen, wenig Platz beanspruchenden und leichten Winkeltrieb aufweist, und die trotz baulich einfacher Ausbildung des Getriebebereiches mit möglichst wenigen Teilen sehr stabil ist.

Die gestellte Aufgabe wird mit den Merkmalen des Patentanspruchs 1 gelöst.

Da der mit dem Tellerrad verbundene Werkzeugträger ausschließlich über die Drehlagerung des Tellerrades im Getriebegehäuse abgestützt ist, ergibt sich ein baulich einfacher Aufbau im Getriebegehäuse mit sehr wenigen Teilen und hoher Stabilität. Aufgrund der hochliegenden, einzigen Drehlagerung mit großem Arbeitsdurchmesser läßt sich das Stützteil sehr stabil ausbilden, d.h. mit großem Außendurchmesser und großer Länge. Der Werkzeugträger ist aufgrund des großen Wirkdurchmessers der Drehlagerung stabil abgestützt. Außerdem sind eine kompakte Bauweise mit nur wenigen Einzelteilen und ein relativ geringes Gesamtgewicht im Getriebebereich möglich.

Da gemäß Anspruch 2 die Drehlagerung zumindest des Tellerrades im Getriebegehäuse außerhalb des Belastungsübertragungsweges vom Fahrwerk zum Maschinenrahmen angeordnet ist, werden Verspannungen weitestgehend vom Tellerrad ferngehalten. Die Einstellgeometrie des Winkeltriebs verändert sich nicht und die Eingriffsverhältnisse bleiben gleich, so daß frühzeitiger Verschleiß vermieden und eine gute gleichbleibende Leistungsübertragung erreicht werden. Die Drehlagerung und das Tellerrad lassen sich aufgrund Fehlens nenneswerter parasitärer Kräfte leichter, graziler und damit platzsparender ausbilden.

Gemäß Anspruch 3 enthält die Drehlagerung des Tellerrades ein einziges Wälzlager, wobei zweckmäßigerweise der Gehäusekranz und der Außenumfang des Tellerrades Komponenten der Wälzlagerung sein können.

Die Ausführungsform gemäß Anspruch 4 ist montagetechnisch zweckmäßig. Das Tellerrad sitzt auf einer Kreisringscheibe, die mit dem Werkzeugträger verbunden ist. Dies vereinfacht die Herstellung bzw. Zahnformung des Tellerrades und die Herstellung des Lagerbereichs an der Kreisringscheibe. Je nach Einsatzzweck läßt sich ein Wälzlager oder ein Gleitlager als die einzige Drehlagerung für das Tellerrad und den Werkzeugträger verwenden.

Die Lagerausbildung ist gemäß Anspruch 5 besonders zweckmäßig und haltbar. Die Kugeln in den Laufbahnen laufen auf Spuren, so daß jede Kugel vier Abstützpunkte hat. Dieses einzige Wälzlager für das Tellerrad und den Werkzeugträger führt axial in beiden Richtungen, radial und auch in allen Schrägrichtungen, so daß sich eine hohe Stabilität ergibt.

Bei einer Ausführung der Drehlagerung als Wälzlager ist es gemäß Anspruch 6 zweckmäßig, aus montagetechnischen Gründen die Wälzkörper von außen in die Laufbahnen einzufädeln.

Bei der Ausführungsform gemäß Anspruch 7 ist das Tellerrad in einem Gleitlager außen gelagert, zweckmäßigerweise im Gehäusekranz des Getriebegehäuses.

Bei der Ausführungsform gemäß Anspruch 8 verhindern die Gleitringdichtungen das Eindringen von Verunreinigungen in die Drehlagerung.

Die Ausführungsform gemäß Anspruch 9 ist baulich einfach. Ein konisches Rohr überträgt auch hohe Belastungen verformungsarm.

Herstellungstechnisch und montagetechnisch ist die Ausführungsform gemäß Anspruch 10 zweckmäßig. Es werden nur wenige Teile benötigt, da das Fahrwerk direkt an dem Fahrwerkträger anzubringen ist.

Anhand der Zeichnung werden Ausführungsformen des Erfindungsgegenstandes sowie ein Beispiel zum Stand der Technik erläutert. Es zeigen:
- Fig. 1: einen Achsschnitt eines Getriebes, z.B. eines Kreiselschwaders, gemäß der Erfindung,
- Fig. 2: eine perspektivische Druntersicht des Getriebes von Fig. 1 gemäß der Erfindung, teilweise mit zur Verdeutlichung weggeschnittenen Teilen, und
- Fig. 3: einen Achsschnitt eines Getriebes gemäß dem Stand der Technik.

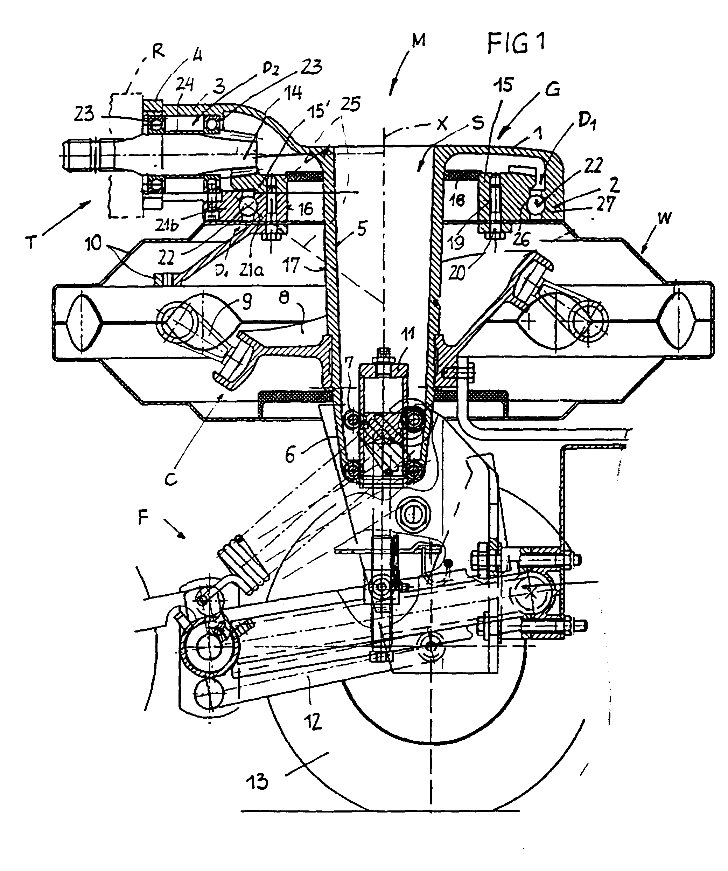

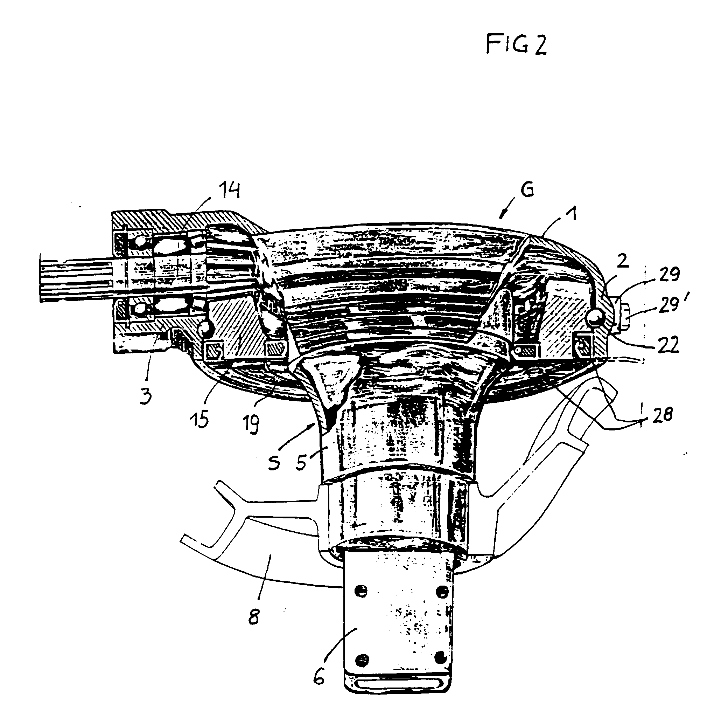

Von einer landwirtschaftlichen Maschine M, z.B. einem Kreiselmäher, einem Kreiselschwader oder einem Kreiselheuer, gemäß den Fig. 1 und 2 ist in Fig. 1 ein Maschinenrahmen R angedeutet, der über ein Getriebegehäuse G eines Winkeltriebs T mit einem Fahrwerk F verbunden ist, das im Arbeitsbetrieb der Maschine M Belastungen über das Getriebegehäuse G an den Maschinenrahmen R überträgt. Das Getriebegehäuse G ist in etwa glockenförmig und einstückig mit einer Deckplatte 1, einem außen umlaufenden, nach unten hängenden Gehäusekranz 2, einem in den Gehäusekranz 2 und die Deckplatte 1 einstückig eingeformten Lagerstutzen 3 sowie einem mittleren, inneren und nach unten weisenden Stützteil S geformt. In dem Getriebegehäuse G ist ein Werkzeugträger W um eine in etwa zum Boden vertikale Achse X drehantreibbar. Am Stützteil S ist eine Bewegungssteuereinrichtung C für nicht gezeigte Werkzeuge des Werkzeughalters W befestigt. Das Fahrwerk F befindet sich unterhalb der Bewegungssteuereinrichtung C und ist ebenfalls am Stützteil S abgestützt.

Der Winkeltrieb T besteht aus einem Kegel-Treibritzel 14, das mit Wälzlagerungen 23 und einem Lagerrohr 24 in dem Lagerstutzen 3 gelagert ist (oder mit entsprechenden Gleitlagern), und einem damit kämmenden, zur Achse X in etwa koaxialen Tellerrad 15 oder 15', mit dem der Werkzeugträger W zur gemeinsamen Zwangsdrehung verbunden ist. Ein Gehäuseflansch 4, z.B. zwischen dem Lagerstutzen 3 und der Deckplatte 1 sowie dem Gehäusekranz 2, dient zum Anschluß des Maschinenrahmens R.

Der Stützteil S ist als ännähernd zur Achse X konzentrisches, sich nach unten verjüngendes Rohr 5 ausgebildet, das sich bis unter die Ebene des Werkzeugträgers W erstreckt und dort in einem, zweckmäßigerweise abgeflachten, einstückig angeformten Fahrwerkträger 6 mit Befestigungsöffnungen 7 endet. Von unten führt eine Einstecköffnung in das Innere des Fahrwerkträgers 6. Oberhalb des Fahrwerkträgers 6 ist auf dem Außenumfang des Stützteils S eine Führungsbahn 8 der Steuereinrichtung C für Stellhebel 9 angebracht. Der Werkzeugträger 10 weist ein Blechgehäuse und innenliegende Übertragungselemente auf, die mit dem Tellerrad 15 bzw. 15' drehantreibbar sind.

Vom Fahrwerk F, das am Fahrwerksträger 6 direkt befestigt ist, erstreckt sich ein Zentrierzapfen 11 nach innen in das Stützteil S. Das Fahrwerk F enthält Fahrwerkskomponenten 12 und wenigstens ein Bodenlaufrad 13, das gegenüber dem Stützteil S abgefedert ist.

Das Treibritzel 14 hat eine in etwa zur Achse X senkrechte Drehachse und kämmt mit dem Tellerrad 15 bzw. 15'.

In der linken Hälfte von Fig. 1 ist das Tellerrad 15' mit Befestigungselementen 20 auf einer kleineren Kreisringscheibe 21a befestigt, die eine Wälzlagerlaufbahn definiert und mit Wälzkörpern 22 in einer Außenlaufbahn einer größeren Kreisringscheibe 21b abgestützt ist, die ihrerseits an der Unterseite des Getriebegehäuses G mit dem Gehäusekranz 2 verschraubt ist. Der Innendurchmesser 16 des Tellerrades 15' und der Kreisringscheibe 21a ist erheblich größer als der Außendurchmesser des Stützteils S. Den Zwischenraum schließt eine Abdeckscheibe 18 ab.

In der rechten Hälfte von Fig. 1 (bevorzugte Ausführungsform) ist das Tellerrad 15 einteilig und derart ausgebildet, daß es mit einem Außenumfangsbereich eine innere Wälzlagerlaufbahn 26 für die Wälzkörper 22 definiert, während eine Innenumfangsfläche des Gehäusekranzes 2 die zugehörige Außenlaufbahn 27 bildet. Die Wälzkörper 22 sind bei dieser Ausbildung zweckmäßigerweise nach dem Positionieren des Tellerrades 15 von außen durch eine Einführöffnung 29 (Fig. 2) eingeführt, ehe die Einführöffnung 29 wieder durch eine Verschlußschraube 29' verschlossen wird.

Zweckmäßigerweise ist die Drehlagerung D1 des Tellerrades 15 oder 15' eine Vierpunkt-Kugellagerung, in der jede Kugel nur auf vier Punkten in den Laufbahnen angreift. Dies ist strichliert durch die Linien 25 in Fig. 1, linke Seite, angedeutet.

Anstelle einer Wälzlagerung könnte auch für das Tellerrad 15 bzw. 15' eine Gleitlagerung vorgesehen sein.

Dank des großen Innendurchmessers des Tellerrades 15 bzw. 15', der außenliegenden Drehlagerung D1 des Tellerrades und der ausschließlichen Abstüzung des Werkzeugträgers W über das Tellerrad, läßt sich das Stützteil 5 stabil und großdurchmeßrig ausbilden, so daß die Steuereinrichtung C und das Fahrwerk F ohne nennenswerte Hilfskomponenten direkt und stabil gegenüber dem Maschinenrahmen R abgestützt sind.

Fig. 3 verdeutlicht eine beim Stand der Technik übliche Bauweise, bei der das Getriebegehäuse unter anderem mit einem als separater Teil ausgebildeter Lagerstutzen oder Tragrohr 34 mit dem Maschinenrahmen verbunden wird. Das Treibritzel 14 ist mittels eines Wälzlagers 23 im Gehäusekranz 2 drehgelagert, während ein weiteres Wälzlager 23 in dem Tragrohr 34 und axial weit beabstandet vom Treibritzel 14 zum Lagern eines Antriebswellen-Abschnittes 30 dient. Der Stützteil S ist ein kurzes, in die Deckwand 1 eingeformtes Rohr, das sich nur bis auf die Höhe des Tellerrades 15 nach unten erstreckt. Am Tellerrad ist der Werkzeugträger 10 befestigt, der im Bereich zweier Drehlagerungen D1 mit Nadellagern oder Wälzlagern an einer Achse 33 gelagert ist, die mit ihrem oberen Endbereich im Stützteil S festgelegt ist und am unteren Endbereich die Führungsbahn 8 der Steuereinrichtung sowie Befestigungsteile 31 und 32 für das Fahrwerk und die Steuereinrichtung trägt. Die Belastungen, die vom Fahrwerk über die Teile 32, und auch von den Steuereinrichtungen bzw. der Führungsbahn 8 über die Teile 31 auf die Achse 33 übertragen werden, wirken mit großen Hebelarmen bezüglich der Deckwand 1. Sie deformieren nicht nur die Deckwand 1, sondern gegebenenfalls auch das Tragrohr 34. Dadurch werden die Eingriffsverhältnisse zwischen dem Treibritzel 14 und dem Tellerrad 15 verschlechtert, das Tellerrad 15 kann sich gegebenenfalls sogar schrägstellen, und auch das Treibritzel 14 kann sich verkanten. Es sind aus diesen Gründen stabile Drehlagerungen 24 und D1 erforderlich und eine massive Ausbildung des Treibritzels 14 und des Tellerrads 15. Durch die Lagerung des Werkzeugträgers bzw. des Tellerrades 15 an der Achse 33 kann nämlich der Stützteil S nur sehr kurz ausgebildet werden, was seine Formsteifigkeit beeinträchtigt und als Zwischenteil die Achse 33 erforderlich macht.

## Patentansprüche

1. Landwirtschaftliche Maschine (M) mit wenigstens einem um eine annähernd vertikale Achse (X) drehantreibbaren Werkzeugträger (W), insbesondere Kreiselmäher, Kreiselschwader oder Kreiselheuer, mit einem Maschinenrahmen (R), wenigstens einem mit dem Maschinenrahmen verbundenen Getriebegehäuse (G) für einen Winkeltrieb (T), mit einem einem am Getriebegehäuse (G) abgestützten Fahrwerk (F), und mit Drehlagerungen (D1, D2) für ein Treibritzel (14) und ein damit kämmendes, mit dem am Getriebegehäuse drehbar abgestützten Werkzeugträger (W) verbundenes Tellerrad (15, 15'), wobei das Getriebegehäuse (G) glockenförmig mit einem äußeren Gehäusekranz (2) und einem inneren Stützteil (S) für das Fahrwerk (F) ausgebildet ist, **dadurch gekennzeichnet**, daß der mit dem Tellerrad (15, 15') verbundene Werkzeugträger (10) ausschließlich über die eine Drehlagerung (D1) des Tellerrades (15, 15') im Getriebegehäuse (G) abgestützt ist.

2. Maschine nach Anspruch 1, **dadurch gekennzeichnet**, daß die Drehlagerung (D1) im Getriebegehäuse (G) außerhalb des Belastungs-Übertragungsweges von dem am Getriebegehäuse (G) befestigten Fahrwerk (F) zum Maschinenrahmen (R) angeordnet ist.

3. Maschine nach Anspruch 1, **dadurch gekennzeichnet**, daß das Tellerrad (15, 15') an einem im wesentlichen zylindrischen Außenumfangsbereich (26) als Wälzlager-Innenlaufbahn ausgebildet ist, die einer im Getriebegehäuse (G), vorzugsweise im Gehäusekranz (2), ausgebildeten Wälzlager-Außenlaufbahn gegenüberliegt, und daß zwischen den Laufbahnen Wälzkörper (22) angeordnet sind, die zusammen mit den Laufbahnen ein einziges, axial in beiden Richtungen und radial führendes Wälzlager für das Tellerrad (15, 15') und den Werkzeugträger (W) bilden.

4. Maschine nach Anspruch 1, **dadurch gekennzeichnet**, daß das Tellerrad (15, 15') auf einer Befestigungsstellen (19) für den Werkzeugträger (10) aufweisenden, ersten Kreisringscheibe (21a) befestigt ist, daß am Gehäusekranz (2) eine größere, zweite Kreisringscheibe (21b) lösbar angebracht ist, und daß die erste Kreisringscheibe (21a) über ein Wälzlager oder ein Gleitlager in der zweiten Kreisringscheibe (21b) drehgelagert ist.

5. Maschine nach den Ansprüchen 3 oder 4, **dadurch gekennzeichnet**, daß die Wälzkörper (22) Kugeln sind, die in den Laufbahnen jeweils nur an vier Punkten (25) abgestützt sind und mit den Laufbahnen ein axial in beiden Richtungen sowie radial und schräg führendes Wälzlager für das Tellerrad (15, 15') und den Werkzeugträger (W) bilden.

6. Maschine nach einem der Ansprüche 3 oder 4, **dadurch gekennzeichnet**, daß im Gehäusekranz (2) wenigstens eine Wälzkörper-Einführöffnung (29) zur Wälzlager-Außenlaufbahn (27) vorgesehen ist.

7. Maschine nach Anspruch 1, **dadurch gekennzeichnet**, daß das Tellerrad (15, 15') mit einem annähernd zylindrischen Außenumfangsbereich (26) im Gehäusekranz (2) in nur einem Gleitlager gleitgelagert ist.

8. Maschine nach wenigstens einem der Ansprüche 1 bis 7, **dadurch gekennzeichnet**, daß zwischen dem Tellerrad (15, 15') bzw. der kleineren Kreisringscheibe (21a) und dem Gehäusekranz (2) einerseits und dem Stützteil (S) andererseits je ein Gleitdichtring (28) vorgesehen ist.

9. Maschine nach Anspruch 1, **dadurch gekennzeichnet**, daß der Stützteil (S) ein in eine ebene Deckwand (1) des Getriebegehäuses (G) einstückig eingeformtes kegeliges Rohr (5) ist.

10. Maschine nach Anspruch 9, **dadurch gekennzeichnet**, daß der Stützteil (S) in seinem unteren Endbereich (6) als, vorzugsweise abgeflachter, Fahrwerkträger ausgebildet ist, an dem das Fahrwerk (F) direkt angebaut ist.

## Claims

1. Agricultural machine (M), including at least one tool carrier (W) which is rotatably drivable about an approximately vertical axis (X), more especially a rotary-type mower, a rotary-type swather or rotary-type tedder, including a machine frame (R), at least one gear housing (G), which is connected to the machine frame, for an angular drive (T), a chassis (F) which is supported on the gear housing (G), and rotary mountings (D1, D2) for a drive pinion (14) and a ring gear (15, 15'), which engages with said pinion and is connected to the tool carrier (W), which is rotatably supported on the gear housing, the gear housing (G) having a bell-shaped configuration with an outer housing rim (2) and an inner supporting member (S) for the chassis (F), characterised in that the tool carrier (10), which is connected to the ring gear (15, 15'), is supported in the gear housng (G) exclusively via the one rotary mounting (D1) of the ring gear (15, 15').

2. Machine according to claim 1, characterised in that the rotary mounting (D1) is disposed in the gear housing (G) externally of the load transmitting path from the chassis (F), which is secured on the gear housing (G), to the machine frame (R).

3. Machine according to claim 1, characterised in that the ring gear (15, 15') is provided on a substantially cylindrical outer circumferential region (26) as an inner roller bearing raceway, which is situated opposite an outer roller bearing raceway provided in the gear housing (G), preferably in the housing rim (2), and in that rolling bodies (22) are disposed between the raceways and form, together with the raceways, a single roller bearing for the ring gear (15, 15') and the tool carrier (W), which roller bearing travels axially in both directions and radially.

4. Machine according to claim 1, characterised in that the ring gear (15, 15') is secured on a first circular disc (21a), which has securing locations (19) for the tool carrier (10), in that a larger second circular disc (21b) is detachably mounted on the housing rim (2), and in that the first circular disc (21a) is rotatably mounted in the second circular disc (21b) via a roller bearing or a friction bearing.

5. Machine according to claims 3 or 4, characterised in that the rolling bodies (22) are balls which are each supported in the raceways at only four points (25) and form, with the raceways, a roller bearing for the ring gear (15, 15') and the tool carrier (W), which roller bearing travels axially in both directions as well as radially and inclinedly.

6. Machine according to one of claims 3 or 4, characterised in that at least one rolling body inlet aperture (29), leading to the outer roller bearing raceway (27), is provided in the housing rim (2).

7. Machine according to claim 1, characterised in that the ring gear (15, 15') is slidably mounted in only one friction bearing with an approximately cylindrical outer circumferential region (26) in the housing rim (2).

8. Machine according to at least one of claims 1 to 7, characterised in that a respective slidable sealing ring (28) is provided between the ring gear (15, 15') or respectively the smaller circular disc (21a) and the housing rim (2), on the one hand, and the supporting member (S), on the other hand.

9. Machine according to claim 1, characterised in that the supporting member (S) is a conical pipe (5), which is integrally moulded in a flat top wall (1) of the gear housing (G).

10. Machine according to claim 9, characterised in that the supporting member (S) is configured in its lower end region (6) as a chassis carrier, which is preferably flattened, and to which the chassis (F) is directly attached.

## Revendications

1. Machine agricole (M) avec au moins un porte-outil (W) pouvant être entraîné en rotation autour d'un axe approximativement vertical (X), notamment faucheur rotatif, ramasseur d'andain rotatif ou ramasseur de foin rotatif, avec un châssis de machine (R), au moins un boîtier d'engrenages (G) relié au châssis de machine pour une commande par engrenage d'angle (T), avec un mécanisme de roulement (F) supporté sur le boîtier d'engrenages (G) et avec des paliers rotatifs (D1, D2) pour un pignon menant (14) et une roue à disque (15, 15') engrenant avec celui-ci, reliée au porte-outil (W) supporté d'une manière rotative au boîtier d'engrenages, le boîtier d'engrenages (G) étant réalisé en forme de cloche avec une couronne de boîtier extérieure (2) et une pièce d'appui intérieure (S) pour le mécanisme de roulement (F), caractérisée en ce que le porte-outil (10) relié à la roue à disque (15, 15') est supporté exclusivement par un palier rotatif (D1) de la roue à disque (15, 15') dans le boîtier d'engrenages (G).

2. Machine selon la revendication 1, caractérisée en ce que le palier rotatif (D1) dans le boîtier d'engrenages (G) est disposé à l'extérieur du trajet de transmission des charges du mécanisme de roulement (F) fixé au boîtier d'engrenage (G) vers le châssis de machine (R).

3. Machine selon la revendication 1, caractérisée en ce que la roue à disque (15, 15') est réalisée à une zone périphérique extérieure (26) sensiblement cylindrique comme trajectoire intérieure du palier à roulement, qui est opposée à une trajectoire extérieure de palier à roulement réalisée dans le boîtier d'engrenages (G), de préférence dans la couronne de boîtier (2) et que sont disposés, entre les trajectoires, des corps de roulement (22) qui forment ensemble avec les trajectoires un palier de roulement unique, s'étendant axialement dans les deux directions et radialement, pour la roue à disque (15, 15') et le porte-outil (W).

4. Machine selon la revendication 1, caractérisée en ce que la roue à disque (15, 15') est fixée sur un premier disque circulaire (21a) présentant des emplacements de fixation (19) pour le porte-outil (10), qu'il est disposé amoviblement à la couronne de boîtier (2) un deuxième disque circulaire plus grand (21b), et que le premier disque circulaire (21a) est logé d'une manière rotative par un palier à roulement ou un palier à glissement dans le deuxième disque circulaire (21b).

5. Machine selon les revendications 3 ou 4, caractérisée en ce que les corps de roulement (22) sont des billes qui sont supportées dans les trajectoires, chacune seulement à quatre points (25) et qui forment avec les trajectoires un palier à roulement menant axialement dans les deux directions ainsi que radialement et en biais pour la roue à disque (15, 15') et le porte-outil (W).

6. Machine selon l'une des revendications 3 ou 4, caractérisée en ce qu'il est prévu dans la couronne de boîtier (2) au moins une ouverture d'insertion de corps de roulement (29) vers la trajectoire extérieure de paliers à roulement (27).

7. Machine selon la revendication 1, caractérisée en ce que la roue à disque (15, 15') est logée d'une manière glissante avec une zone périphérique extérieure approximativement cylindrique (26) dans la couronne de boîtier (2) dans un seul palier de glissement.

8. Machine selon au moins l'une des revendications 1 à 7, caractérisée en ce qu'il est prévu entre la roue à disque (15, 15') respectivement le disque circulaire plus petit (21a) et la couronne de boîtier (2) d'une part, et la pièce d'appui (S) d'autre part, respectivement, une bague d'étanchéité glissante (28).

9. Machine selon la revendication 1, caractérisée en ce que la pièce d'appui (S) est un tuyau conique (5) formé en une pièce dans une paroi de recouvrement plane (1) du boîtier d'engrenage (G).

10. Machine selon la revendication 9, caractérisée en ce que la pièce d'appui (S) est réalisée dans sa zone d'extrémité inférieure (6) comme support de mécanisme de roulement, de préférence aplati, sur lequel est monté directement le mécanisme de roulement (F).
